# EUROPÄISCHE PATENTSCHRIFT

(11) **EP 3 822 525 B1**
(45) Veröffentlichungstag und Bekanntmachung des Hinweises auf die Patenterteilung: **20.09.2023**
(21) Anmeldenummer: 19209407.6
(22) Anmeldetag: 15.11.2019
(51) Int. Cl.: F17C 13/04, F16K 17/36

(54) **ABSCHALTVENTIL FÜR GAS**
SHUT-OFF VALVE FOR GAS
SOUPAPE D'ARRÊT POUR GAZ

(43) Veröffentlichungstag der Anmeldung: 19.05.2021
(60) Teilanmeldung: 22154198.0
(73) Patentinhaber: GOK Regler- und Armaturen-Gesellschaft mbH & Co.KG, 97340 Marktbreit (DE)
(72) Erfinder: SMEENK, Alfons, 97297 Waldbüttelbrunn (DE)
(74) Vertreter: Vossius & Partner Patentanwälte Rechtsanwälte mbB

(56) Entgegenhaltungen:
- BE-A- 829 818
- DE-U1-202013 012 250
- FR-A- 1 014 869
- JP-A- S55 155 975
- US-A- 3 994 359
- US-A- 3 994 360
- US-A- 4 278 102
- US-A1- 2012 255 525

## Beschreibung

Die Erfindung betrifft ein Abschaltventil, insbesondere zur Verwendung in Reisemobilen oder Caravans, ein Leitungssystem, insbesondere zur Verwendung in Reisemobilen oder Caravans sowie ein Fahrzeug, insbesondere ein Reisemobil oder Caravan. Die Erfindung bezieht sich darüber hinaus auf die Verwendung eines solchen Ventils oder Leitungssystems in Verbindung mit einer Gasflasche.

Bei dem erfindungsgemäßen Abschaltventil kann es sich insbesondere um ein Crashventil und/oder ein Kippschutzventil handeln, insbesondere um ein mechanisches und/oder rein mechanisches Crashventil und/oder Kippschutzventil.

Ein Kippschutzventil unterbricht einen Gasfluss durch das Ventil bei Überschreiten eines vorgegebenen Kippwinkels.

Es bekannt, bei einigen mit Gasflaschen betriebenen Geräten (z.B. Heizpilzen) ein solches Kippschutzventil zu verwenden. Das Kippschutzventil sperrt den Gasfluss, wenn das Gerät kippt.

Ein beispielhaftes Kippschutzventil ist aus der EP 1 298 392 A1 bekannt. Das bekannte Kippschutzventil weist einen einem Gaseinlass in Stromrichtung nachgeordneten Ventilraum auf, in welchem ein mittels einer Feder vorgespannter Ventilteller gegenüberliegend einem Ventilsitz angeordnet ist. Eine sich vom Ventilteller erstreckende erste Ventilstange ragt in einen Kippschaltraum. Ein im Kippschaltraum vorgesehenes Kippgewicht zwingt den Ventilteller entgegen der Rückstellkraft der Feder in Offenstellung, solange ein vorgegebener Kippwinkel nicht erreicht ist. Bei Überschreiten des vorgegebenen Kippwinkels wird der Ventilteller durch die Wirkung der Feder in einen geschlossenen Zustand gezwungen, bei dem der Ventilteller dichtend gegen den Ventilsitz anliegt. Sobald der vorgegebene Kippwinkel unterschritten wird, kehrt das Kippgewicht in seinen Ausgangszustand zurück und zwingt damit wieder den Ventilteller entgegen der Rückstellkraft der Feder in Offenstellung.

Ein Crashventil unterbricht einen Gasfluss durch das Ventil bei Überschreiten einer vorgegebenen Beschleunigung (etwa bei einem Unfall).

Um bei Reisemobilen oder Caravans während der Fahrt gasbetriebene Geräte bei geöffnetem Gasflaschenventil zu betreiben, ist aus Sicherheitsgründen durch ein solches Crashventil sicherzustellen, dass bei einem Unfall des Fahrzeugs ein weiterer Gasaustritt aus der Gasflasche verhindert wird. Bekannte Crashventile werden im Niederdruckbereich des Gasleitungssystems, d.h. stromabwärts des Gasdruckreglers angeordnet. Derartige Crashventile sind im Markt bekannt und werden z.B. durch die Anmelderin unter der Handelsbezeichnung Caramatic DriveOne und Caramatic DriveTwo vertrieben. Ein weiteres Ventil ist in der EP 2 096 340 B1 offenbart.

Ein entsprechendes Ventil ist darüber hinaus auch aus der US 4 799 505 A bekannt. Bei diesem Ventil ist ein Öffnen des Ventils nach dem Auslösen nur durch Betätigung eines manuell bedienbaren Rückstellhebels möglich ist. Bei dem bekannten Abschaltventil wird ein Ventilteller bei Überschreiten der vorgegebenen Beschleunigung, durch eine Feder in den geschlossenen Zustand gezwungen. Zum manuellen Öffnen des Ventils ist eine relativ große Kraft erforderlich.

Die DE 20 2013 012 250 U1 offenbart ein Sicherheitsventil, welches in einer ordnungsgemäßen Normalposition einen Gasdurchfluss ermöglicht und bei einer gegenüber der Normalposition um einen Kippwinkel von mehr als 35° verkippten Sicherheitsposition den Gasdurchfluss selbsttätig unterbricht.

Die US 3 994 360 A betrifft ein Kraftfahrzeug-Kraftstoffsystem, das einen Kraftstofftank, eine Kraftstoffpumpe, eine Kraftstoffdosiervorrichtung zum Dosieren des Kraftstoffflusses zu einem zugehörigen, Kraftstoff verbrauchenden Motor und einen Kraftstoffbehälter (wie z.B. eine Vergaser-Kraftstoffschale) aufweist, welches eine Ventilanordnung aufweist, die im Allgemeinen zwischen dem Auslass der Kraftstoffpumpe und dem Kraftstoffbehälter angeordnet ist, wobei diese Anordnung z.B. auf einen Aufprall des zugehörigen Fahrzeugs reagiert, wenn das zugehörige Fahrzeug einen Aufprall erlebt oder einen Überschlag erfährt, woraufhin die Ventilanordnung wirksam wird, um den weiteren Fluss von Kraftstoff von der Kraftstoffpumpe in den Kraftstoffbehälter zu verhindern.

Die US 4 278 102 A und die JP S55 155975 A betreffen jeweils ein Abschaltventil.

Aufgabe der Erfindung ist es, Nachteile der bekannten Ventile zu beheben. Insbesondere kann es als Aufgabe der Erfindung angesehen werden, einen Kipp- und/oder Aufprallschutz mit einem einfacheren Aufbau bereitzustellen. Dadurch können beispielsweise die Herstellungskosten reduziert und der Einbau sowie die Wartung der Kipp- und Aufprallschutzanordnung vereinfacht werden.

Diese Aufgabe wird durch die Merkmale der unabhängigen Patentansprüche gelöst. Bevorzugte Ausgestaltungen der Erfindung ergeben sich aus den Merkmalen der abhängigen Patentansprüche.

Eine Ausführungsform der Erfindung betrifft ein Abschaltventil gemäß Anspruch 1. Dementsprechend wird vorgeschlagen, dass Ventil so auszubilden, dass eine Gewichtskraft des Trägheitskörpers, die in einer Offenstellung des Ventiltellers auf den Ventilteller wirkt und, optional eine Gewichtskraft des Trägheitskörpers, die in einer Schließstellung des Ventiltellers auf den Ventilteller wirkt, kleiner ist, als eine durch einen Gasdruck bewirkte Schließkraft, welche auf den Ventilteller in der Schließstellung des Ventiltellers wirkt.

Mit anderen Worten kann die Schließkraft bei dem erfindungsgemäßen Abschaltventil im Wesentlichen durch den am Gaseinlass anstehenden Gasdruck erzeugt werden. Die Feder erfüllt dann lediglich die Funktion, bei Überschreiten der vorgegebenen Beschleunigung oder des vorgegebenen Kippwinkels, den Ventilteller gegen den Ventilsitz zu zwingen. Sobald der Ventilteller am Ventilsitz anliegt, ist der Ventilraum gasdicht verschlossen. Es wirkt sodann auf den Ventilteller zusätzlich zu der durch die Feder bereit gestellten Federkraft die durch den Gasdruck bewirkte Schließkraft, während die durch den Trägheitskörper erzeugte Gewichtskraft zumindest zeitweise entfällt oder verringert ist. Die durch den Gasdruck erzeugte Schließkraft ist vorzugsweise so groß, dass die durch den Trägheitskörper bewirkte Gewichtskraft auch bei einem Unterschreiten des vorgegebenen Kippwinkels kein selbsttätiges Zurückstellen des Ventiltellers in die Offenstellung ermöglicht. Dementsprechend bleibt das erfindungsgemäße Abschaltventil nach der Auslösung dauerhaft in dem geschlossenen Zustand. Dies gilt vorzugsweise selbst dann, wenn auf der Seite des Ventiltellers, die mit dem Gaseinlass in Fluidverbindung steht und auf der Seite des Ventiltellers, die mit der Gasauslass in Fluidverbindung steht, der gleiche oder in etwa der gleiche Gasdruck anliegt.

Der Ventilteller kann in diesem Fall vorzugsweise nur durch Betätigen (insbesondere manuelles Betätigen) eines Mechanismus zur Rückstellung des Ventils in die Offenstellung wieder in die Offenstellung gezwungen werden, etwa durch manuelles Betätigen eines Rückstellknopfs.

Im Sinne der vorliegenden Erfindung wird unter dem Begriff "Gasdruck" ein Überdruck gegenüber dem atmosphärischen Druck verstanden. Der Gasdruck kann z.B. mindestens 0,3 bar betragen. Der Gasdruck kann bis 16 bar und auch mehr betragen, d. h. das erfindungsgemäße Kippschutzventil kann auch unmittelbar an eine Flüssiggasflasche angeschlossen werden, ohne Zwischenschaltung eines Druckminderers. Vorzugsweise beträgt der Gasdruck zwischen 0,3 und 16 bar. In anderen Worten ist das Ventil vorzugsweise so ausgebildet, dass die Gewichtskraft des Trägheitskörpers, die in einer Offenstellung des Ventiltellers auf den Ventilteller wirkt und, optional eine Gewichtskraft des Trägheitskörpers, die in einer Schließstellung des Ventiltellers auf den Ventilteller wirkt, kleiner ist als die durch einen Gasdruck bewirkte Schließkraft, wenn der Gasdruck mindestens 0,1 bar, vorzugsweise mindestens 0,29 bar, stärker bevorzugt mindestens 0,3 bar beträgt.

Die vorgegebene Beschleunigung ist vorzugsweise eine Beschleunigung, die typischerweise bei einem Aufprall auftritt, d.h. eine Aufprallbeschleunigung. Die vorgegebene Beschleunigung beträgt vorzugsweise mindestens 2 g, stärker bevorzugt mindestens 3 g.

Das vorgeschlagene Abschaltventil ist einfach aufgebaut. Es lässt sich unter Anwendung einer relativ geringen Kraft von der geschlossenen Stellung manuell in die offene Stellung zurückstellen. Das Abschaltventil kann als Aufprallschutzventil und/oder als Kippschutzventil eingerichtet sein.

Vorzugsweise ist der Trägheitskörper eine Kugel. Ein solcher Trägheitskörper ist kostengünstig verfügbar.

Der Trägheitskörper weist vorzugsweise eine Masse im Bereich zwischen 30 und 100 g, vorzugsweise zwischen 50 und 70 g auf. Der Schaltraum des Trägheitskörpers ist vorzugsweise im Wesentlichen rotationssymmetrisch ausgebildet. Dadurch kann gewährleistet werden, dass das Auslöseverhalten des Abschaltventils unabhängig von der Beschleunigungsrichtung und/oder der Kipprichtung ist.

Die Angabe "im Wesentlichen" bedeutet, dass der Schaltraum Elemente (z.B. den Gaseinlass und den Gasauslass) aufweisen kann, die die Rotationssymmetrie brechen, wobei aber die oben genannte Funktion weiterhin erfüllt wird.

Vorzugsweise ist der Schaltraum nicht mit Gas beaufschlagt. Der Schaltraum kann von den gasleitenden Räumen des Ventils separiert und/oder gegenüber diesen gasleitenden Räumen abgedichtet sein. Insofern kann im Schaltraum atmosphärischer Druck herrschen. Auf eine Abdichtung des Schaltraums gegenüber der Umgebung kann verzichtet werden, was die Bauweise des Ventils zusätzlich vereinfacht.

Der Schaltraum kann sich in einer von der ersten Ventilstange weg weisenden Richtung erweitern, vorzugsweise konisch. Das heißt, in Betriebsposition des Abschaltventils kann sich der Schaltraum nach oben erweitern, vorzugsweise konisch nach oben. Beispielsweise kann der Schaltraum im Wesentlichen die Form eines Kegelstumpfes aufweisen. Alternativ oder zusätzlich kann der Schaltraum auch konkav sein oder konkave Abschnitte aufweisen. Auch eine treppenförmige Gestaltung ist möglich.

Die Angabe "im Wesentlichen" bedeutet, dass der Schaltraum Elemente (z.B. den Gaseinlass und den Gasauslass) aufweisen kann, die von der Form des Kegelstumpfes abweichen, wobei die unten genannte Funktion weiterhin erfüllt wird.

Beispielsweise bei einem Aufprall des Fahrzeuges (z.B. einem Auffahrunfall) erfährt der Trägheitskörper eine Beschleunigung. Diese erzeugt eine Kraft (Beschleunigungskraft), die sich aus der Beschleunigung multipliziert mit der Gewichtskraft des Trägheitskörpers ergibt. Wenn der Trägheitskörper durch die Beschleunigung gegen eine Seitenwand des (z.B. konisch) sich erweiternden Schaltraums gedrückt wird, teilt sich diese Kraft auf in eine von der Wand aufgenommene Anlage- bzw. Normalkraft und eine Kraft, die parallel zur Wand ist, so dass sich der Trägheitskörper der Wand entlang nach oben bewegt. Die parallel zur Wand gerichtete Kraft *F_{P}* beträgt beispielsweise *F_{P}* = *F_{B}* cos *α ,* wobei *F_{B}* die auf den Trägheitskörper wirkende Beschleunigungskraft und *α* der Winkel der Wand des Schaltraums bezüglich einer Rotationsachse des Schaltraums bzw. Längsachse des Abschaltventils sind.

Die Rotationsachse des Schaltraums entspricht beispielsweise der Längsachse bzw. einer Symmetrieachse des Abschaltventils. Vorzugsweise ist die Ventilstange parallel zur bzw. liegt auf der Rotationsachse des Schaltraums und/oder der Längsachse bzw. Symmetrieachse des Abschaltventils.

Dabei hat es sich als besonders bevorzugt erwiesen, dass eine Wand des Schaltraums des Trägheitskörpers bezüglich einer Rotationsachse einen Winkel von 9° bis 16°, vorzugsweise 10° bis 14° bildet. Vorzugsweise hat der Trägheitskörper bei diesem Aufbau des Schaltraums eine Masse im Bereich zwischen 30 und 100 g, bevorzugt zwischen 50 und 70 g. Durch diese Masse und diesen Aufbau des Schaltraums kann ein Auslösen des Abschaltventils bei Beschleunigungen, die typischerweise bei einem Aufprall eines Fahrzeuges auftreten, erreicht werden.

Die vorgeschlagene Ausgestaltung des Schaltraums gewährleistet daher ein sicheres und zuverlässiges Schließen des Abschaltventils bei Überschreiten der vorgegebenen Beschleunigung bzw. des vorgegebenen Kippwinkels.

Vorzugsweise ist die erste Ventilstange gegenüber dem Schaltraum des Trägheitskörpers durch eine erste Dichtung abgedichtet. Die erste Dichtung ist vorzugsweise ringförmig und kann beispielsweise ein O-Ring, eine ringförmige Lippendichtung oder eine anderer geeigneter Dichtungstyp sein. Das Gleiche gilt auch für die unten beschriebene zweite, dritte und vierte Dichtung. Damit wird sichergestellt, dass kein Gas in den Schaltraum eindringt, unabhängig von der Stellung der Ventilstange.

Vorzugsweise ist eine dem Ventilraum zugewandte erste Fläche des Ventiltellers größer als eine dem Gasauslass zugewandte zweite Fläche des Ventiltellers. Die erste Fläche steht vorzugsweise in der Schließstellung mit dem Gaseinlass in Fluidverbindung. Die zweite Fläche steht vorzugsweise in der Schließstellung mit dem Gasauslass in Fluidverbindung. Mit anderen Worten liegt an der ersten Fläche in der Schließstellung vorzugsweise der Druck stromaufwärts vom Ventilteller an. An der zweiten Fläche liegt in der Schließstellung vorzugsweise der Druck stromabwärts vom Ventilteller an. Mit anderen Worten wirkt der Gasdruck im Ventilraum auf die erste Fläche und der Gasdruck im Gasauslass wirkt auf die zweite Fläche.

Besonders bevorzugt ist die erste Fläche zumindest doppelt so groß wie die zweite Fläche. Zu diesem Zweck kann der Ventilteller zum Gasauslass hin eine Stufe aufweisen.

Dadurch, dass die erste Fläche des Ventiltellers zumindest doppelt so groß ist, wie die dem Gasauslass zugewandte zweite Fläche, kann besonders einfach gewährleistet werden, dass der Ventilteller auch dann durch den Gasdruck in Schließstellung gezwungen wird, wenn am Gasauslass und am Gaseinlass derselbe Druck ansteht.

Der Ventilteller ist im Schließzustand gegenüber dem Ventilsitz vorzugsweise durch eine zweite Dichtung abgedichtet. Ferner ist der Ventilteller im Schließzustand gegenüber einem dem Gasauslass zugewandten weiteren Ventilsitz vorzugsweise durch eine dritte Dichtung abgedichtet. Die vorgeschlagene Ausgestaltung gewährleistet eine sichere und zuverlässige Abdichtung des Ventilraums im Schließzustand. Darüber hinaus werden die erste und die zweite Fläche des Ventiltellers so zuverlässig voneinander getrennt.

Vorzugsweise umgeben im Schließzustand die zweite Dichtung einen ersten Bereich des Ventiltellers und die dritte Dichtung einen zweiten Bereich des Ventiltellers, wobei der erste Bereich näher am Gaseinlass ist als der zweite Bereich und der erste Bereich einen größeren Durchmesser hat als der zweite Bereich. Mit anderen Worten hat die zweite Dichtung vorzugsweise einen größeren Durchmesser als die erste Dichtung. Besonders bevorzugt hat der erste Bereich eine Querschnittsfläche, die mindestens doppelt so groß ist wie eine Querschnittsfläche des zweiten Bereichs.

Auf diese Weise kann besonders zuverlässig erreicht werden, dass die dem Ventilraum zugewandte erste Fläche größer ist als die dem Gasauslass zugewandte zweite Fläche.

Vorzugsweise weist der Ventilteller an einer der ersten Ventilstange gegenüberliegenden Seite eine in einer Führung geführte zweite Ventilstange auf. Die zweite Ventilstange kann in der Führung durch eine vierte Dichtung abgedichtet sein.

Indem der Ventilteller durch die erste und die zweite Ventilstange geführt ist, wird eine besonders zuverlässige Bewegung vom Öffnungs- in den Schließzustand und umgekehrt erreicht.

Durch das Vorsehen der vierten Dichtung kann das Auftreten einer Kolbenkraft, die auf die zweite Ventilstange wirkt und den Ventilteller zusätzlich in die Schließstellung presst, verhindert werden. In der Offenstellung des Ventiltellers können sich so die auf den Ventilteller wirkenden Kräfte (z.B. Gasdruck am Gaseinlass, Gasdruck am Gasauslass, Vorspannkraft der Feder und Gewichtskraft des Trägheitselementes) besonders einfach aufheben, so dass der Ventilteller in der Offenstellung bleibt, solange die vorgegebene Beschleunigung und/oder der vorgegebene Kippwinkel nicht überschritten werden. Durch diese Dichtungsanordnung ist das Abschaltventil besonders geeignet, um direkt an eine Gasflasche bzw. stromaufwärts eines Druckminderers, d.h. im Hochdruckbereich, angeordnet zu werden.

Vorzugsweise sind die erste Ventilstange, der Ventilteller und die zweite Ventilstange einstückig ausgebildet. Die Feder umgreift vorzugsweise die zweite Ventilstange. Damit wird eine besonders kompakte Bauweise erreicht.

Vorzugsweise ist an einem Deckel des Schaltraums ein Rückstellknopf vorgesehen, mit dem der Trägheitskörper gegen die erste Ventilstange und damit der Ventilteller manuell zurück in die Offenstellung gezwungen werden kann. Der Rückstellknopf kann als im Deckel verschiebbar gehaltener Zylinder ausgebildet sein. Es kann jedoch auch ein anderer Mechanismus zu diesem Zweck verwendet werden, etwa ein Hebel. Alternativ oder zusätzlich kann ein solcher Mechanismus zur Rückstellung des Ventils auch unmittelbar auf die Ventilstange und/oder den Ventilteller wirken.

Das erfindungsgemäße Abschaltventil unterbricht den Gasfluss vorzugsweise sowohl bei Überschreiten eines vorgegebenen Kippwinkels (selbst dann, wenn keine maßgebliche Beschleunigung auftritt), als auch bei Überschreiten einer vorgegebenen Beschleunigung (selbst dann, wenn kein Kippen auftritt). Nach dem Auslösen kehrt das Abschaltventil vorzugsweise nicht selbständig in die Offenstellung zurück, also selbst dann nicht, wenn das Ventil wieder in eine definierte (aufrechte) Ausrichtung gebracht wird.

Vorzugsweise ist das erfindungsgemäße Abschaltventil eingerichtet, um unmittelbar an eine Gasflasche und/oder ohne einen zwischen Gasflasche und Abschaltventil angeordneten Druckminderer angeschlossen zu werden.

Vorzugsweise ist das erfindungsgemäße Abschaltventil eingerichtet, um unmittelbar an eine Gasflasche angeschlossen zu werden. Ferner weist das Abschaltventil eine Abstützeinrichtung auf, die eingerichtet ist, um das Abschaltventil derart an der Gasflasche abzustützen, dass das Abschaltventil eine definierte Ausrichtung relativ zur Gasflasche einnimmt.

Unter der definierten Ausrichtung des Abschaltventils kann die für die Funktion des Abschaltventils erforderliche Ausrichtung des Abschaltventils verstanden werden. Besonders bevorzugt ist die definierte Ausrichtung eine aufrechte Ausrichtung des Abschaltventils, bei welcher sich der Trägheitskörper im Ruhezustand vertikal oberhalb oder vertikal unterhalb der Ventilstange befindet. In der definierten Ausrichtung hält der Trägheitskörper den Ventilteller entgegen der Rückstellkraft der Feder in der Offenstellung, sofern die vorgegebene Beschleunigung oder/und der vorgegebene Kippwinkel nicht erreicht ist.

Die Abstützeinrichtung weist vorzugsweise zwei Abstützarme auf, die schwenkbar an dem Abschaltventil angebracht sind. Die beiden Abstützarme sind eingerichtet, um zumindest teilweise mit der Gasflasche in Eingriff zu treten, d.h. sich an der Gasflasche abzustützen. Wenn beide Abstützarme mit der Gasflasche in Eingriff treten, nimmt die Abstützeinrichtung relativ zur Gasflasche die definierte Ausrichtung ein.

Auf diese Weise kann sichergestellt werden, dass das Abschaltventil gegenüber der Gasflasche richtig ausgerichtet ist, so dass die Funktion des Abschaltventils gewährleistet ist.

Vorzugsweise weist das Abschaltventil eine Libelle auf, die derart angeordnet ist, dass sich die Libellenblase im Normalpunkt befindet, wenn das Abschaltventil die definierte Ausrichtung einnimmt.

Unter einer Libelle wird in der Messtechnik ein geschlossener, hohler Körper, dessen Innenseite so geschliffen und mit einer leichtbeweglichen Flüssigkeit gefüllt ist, dass eine Gasblase (Libellenblase) entsteht, die zur Anzeige genutzt werden kann, wobei der hohle Körper üblicherweise aus einem durchsichtigen Material gefertigt ist. Der Normalpunkt der Libelle ist der Punkt, an dem sich die Libellenblase befindet, wenn die Libelle horizontal ausgerichtet ist.

Die Libelle ist vorzugsweise eine Dosenlibelle.

Vorzugsweise ist die Libelle an einer Struktur und/oder Fläche des Abschaltventils angebracht, die bei richtiger Ausrichtung des Abschaltventils horizontal ausgerichtet ist. Besonders bevorzugt ist die Libelle am Rückstellknopf angebracht.

Auf diese Weise lässt sich das Abschaltventil auf einfache Weise in die definierte Ausrichtung gebracht werden.

Eine weitere Ausführungsform der Erfindung betrifft ein Leitungssystem mit einem Abschaltventil gemäß Anspruch 14. Mit anderen Worten weist das Leitungssystem ein stromaufwärts des Druckminderers angeordnetes Abschaltventil zum Unterbrechen eines Gasdurchflusses bei Überschreiten einer vorgegebenen Beschleunigung auf. Vorzugsweise ist das Abschaltventil unmittelbar am Anschluss für die Gasflasche angeordnet. Dieses Abschaltventil ist vorzugsweise zusätzlich auch ein Kippschutzventil, wie z.B. oben beschrieben.

Insbesondere kann das Abschaltventil einen Ventilteller aufweisen, der, wie im Kontext des Abschaltventils beschrieben, eine erste und zweite Ventilstange aufweist, die jeweils mit einer zweiten bzw. dritten Dichtung abgedichtet sind. Auf diese Weise ist das Abschaltventil besonders geeignet, um im Hochdruckbereich angeschlossen zu werden.

Die Erfindung betrifft somit auch ein Abschaltventil zum Unterbrechen eines Gasdurchflusses bei Überschreiten einer vorgegebenen Beschleunigung, das geeignet ist, um in einem Leitungssystem unmittelbar an eine Gasflasche und/oder stromaufwärts eines Druckminderers angeschlossen zu werden. Das Abschaltventil kann vorzugsweise wie in der Beschreibung und den Ansprüchen beschrieben ausgestaltet sein. Das Leitungssystem kann auch die Gasflasche umfassen.

Eine weitere Ausführungsform der Erfindung betrifft ein Fahrzeug gemäß Anspruch 15. Vorzugsweise handelt es sich bei dem Fahrzeug um einen Caravan oder Reisemobil. Das heißt, ein Fahrzeug im Sinne der Erfindung kann auch ein Anhänger sein.

Die Erfindung bezieht sich darüber hinaus auf die Verwendung eines erfindungsgemäßen Ventils oder Leitungssystems. Im Rahmen der Verwendung wird das Ventil mit einem Gasdruck beaufschlagt.

Nachfolgend werden Ausführungsbeispiele der Erfindung anhand der Zeichnung näher erläutert. Es handelt sich dabei lediglich um schematische Darstellungen, die häufig zur Verdeutlichung bestimmter Aspekte andere (optionale) Strukturen nicht darstellen oder aber auch verschiedene optionale, miteinander einhergehende Aspekte in einer Darstellung berücksichtigen. Gleiche Bezugszeichen weisen in diesem Zusammenhang auf äquivalente, ähnliche, vergleichbare oder gleiche Bauteile in den dargestellten Ausführungsformen hin. Soweit die vorgehende bzw. nachfolgende Beschreibung den Ausdruck "im Wesentlichen" verwendet, sind auch solche Ausführungsformen umfasst, in denen das jeweilige Merkmal vollständig oder komplett vorliegt.

Die gezeigten Ausführungsformen können innerhalb des Schutzumfangs der Ansprüche in vielerlei Hinsicht verändert werden. Die Offenbarung der Figuren soll den Schutzumfang der Erfindung daher nicht beschränken. Dabei ist zu beachten, dass die Merkmale der obengenannten Ausführungsformen in einer einzigen Ausführungsform kombiniert werden können. Es zeigen:
- Fig. 1: eine Schnittansicht durch ein Abschaltventil gemäß einem Ausführungsbeispiel der Erfindung in Offenstellung,
- Fig. 2: das in Fig. 1 gezeigte Abschaltventil in geschlossener Stellung,
- Fig. 3: eine perspektivische Ansicht des in den Fig. 1 und 2 dargestellten Abschaltventils,
- Fig. 4: eine perspektivische Ansicht eines Abschaltventils gemäß einem weiteren Ausführungsbeispiel der Erfindung,
- Fig. 5: eine perspektivische Ansicht eines Abschaltventils gemäß einem weiteren Ausführungsbeispiel der Erfindung,
- Fig. 6: ein Leitungssystem gemäß einem Ausführungsbeispiel der Erfindung.
- Fig. 7: ein Fahrzeug gemäß einem Ausführungsbeispiel der Erfindung.

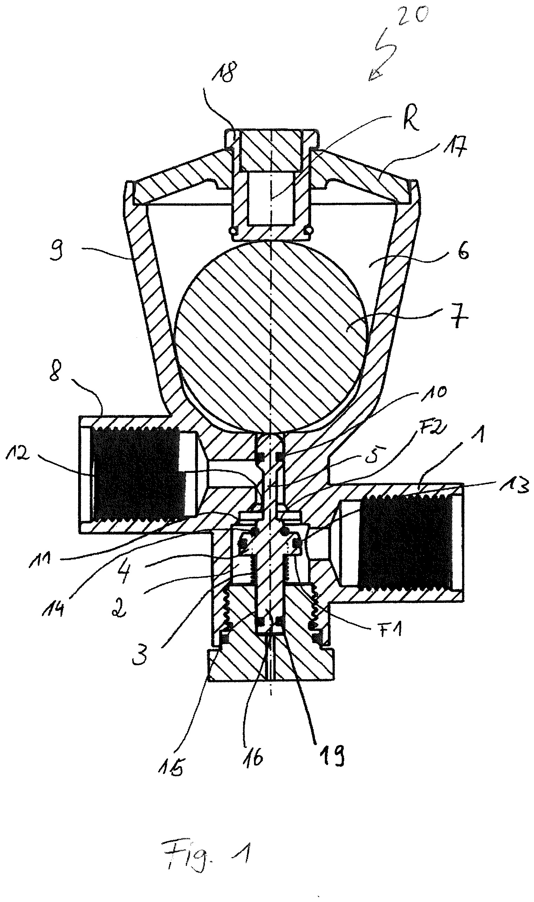

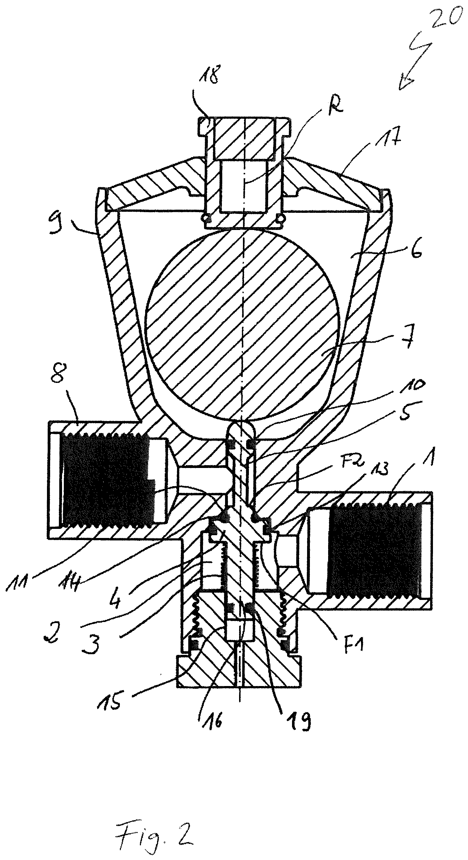

In den Figuren 1 und 2 ist jeweils eine Schnittansicht eines Abschaltventils 20 gemäß einem Ausführungsbeispiel der Erfindung gezeigt. Das Abschaltventil 20 weist einen Gaseinlass 1 sowie einen in Stromrichtung nachgeordneten Ventilraum 2 auf. Im Ventilraum 2 ist ein mittels einer Feder 3 vorgespannter Ventilteller 4 vorgesehen. Eine sich vom Ventilteller 4 ersteckende erste Ventilstange 5 ragt in einen Kippschaltraum 6, welcher sich in der Ansicht von Fig. 1 oberhalb des Ventilraums 2 befindet. Im Kippschaltraum 2 ist ein Trägheitskörper 7 aufgenommen, welcher hier vorzugsweise als Kugel ausgebildet ist. Der Trägheitskörper drückt die erste Ventilstange 5 und damit den Ventilteller 4 entgegen der Rückstellkraft der Feder 3 in Offenstellung. Mit dem Bezugszeichen 8 ist ein dem Ventilraum 2 in Stromrichtung nachgeordneter Gasauslass bezeichnet.

Der Schaltraum 6 ist zweckmäßigerweise rotationssymmetrisch ausgebildet. Er erweitert sich in einer vor der ersten Ventilstange 5 weg weisenden Richtung konisch. Eine Wand 9 weist bezüglich einer Rotationsachse R einen Winkel von 9° bis 16°, vorzugsweise 10° bis 14°, insbesondere 12°, auf.

Die erste Ventilstange 5 ist gegenüber dem Kippschaltraum 6 durch eine erste Dichtung 10 abgedichtet. Eine dem Ventilraum 2 zugewandte erste Fläche F1 des Ventiltellers 4 ist gemäß dem vorliegenden Ausführungsbeispiel zumindest doppelt so groß wie eine dem Gasauslass 8 zugewandte zweite Fläche F2.

Der Ventilteller 4 ist hier zweckmäßigerweise stufenartig ausgebildet und weist einen dem Ventilraum 2 zugewandten ersten Durchmesser auf, welcher größer ist als ein dem Gasauslass 8 zugewandter zweiter Durchmesser.

Mit dem Bezugszeichen 11 ist ein Ventilsitz bezeichnet, welcher gegenüberliegend dem Ventilteller 4, insbesondere gegenüber dem großen Durchmesser des Ventiltellers 4, angeordnet ist. Mit dem Bezugszeichen 12 ist ein weiterer Ventilsitz bezeichnet, welcher gegenüberliegend dem kleinen Durchmesser des Ventiltellers 4 angeordnet ist.

Mit dem Bezugszeichen 13 ist eine zweite Dichtung bezeichnet, welche den Ventilteller 4 im Bereich seines großen Durchmessers umgibt. Mit dem Bezugszeichen 14 ist eine dritte Dichtung bezeichnet, welche den Ventilteller 4 im Bereich seines kleinen Durchmessers umgibt. Die zweite Dichtung 13 dichtet im Bereich des bzw. mit dem Ventilsitz 11 ab. Die dritte Dichtung 14 dichtet im Bereich des bzw. mit dem Ventilsitz 12 ab.

Der Ventilteller 4 weist an einer der ersten Ventilstange 5 gegenüberliegenden Seite eine in einer Führung 15 geführte zweite Ventilstange 16 auf. Die beiden Ventilstangen 5, 16 und der Ventilteller 4 sind einstückig ausgebildet. Die Feder 3 umgreift die zweite Ventilstange 16. An einem Deckel 17 des Schaltraums 6 ist ein Rückstellknopf 18 vorgesehen, mit dem der Trägheitskörper 7 gegen die erste Ventilstange 5 und damit der Ventilteller 4 manuell zurück in die Offenstellung gezwungen werden kann.

Die zweite Ventilstange 16 weist eine vierte Dichtung 19 auf, der denjenigen durch den Gasdruck im Ventilraum 2 erzeugten Kräften entgegenwirkt, die auf die Dichtung 10 wirken. Somit bewirken die beiden Dichtungen 10, 19, dass die durch den Gasdruck auf die Dichtungen 10, 19 wirkenden Kräfte sich zumindest teilweise oder vollständig aufheben. Somit erfolgt durch den Gasdruck keine Verschiebung der beiden mit dem Ventilteller 4 verbundenen Ventilstangen 5, 16.

Die erste, zweite, dritte und vierte Dichtung 10, 13, 14, 19 sind in diesem Ausführungsbeispiel als O-Ringe ausgebildet.

Die Funktion des Abschaltventils wird nunmehr in Zusammensicht mit Fig. 2 näher erläutert.

Fig. 2 zeigt den Zustand des Abschaltventils, nachdem die vorgegebene Beschleunigung oder ein vorgegebener Kippwinkel überschritten worden ist und das Abschaltventil ggf. nachfolgend wieder in die aufrechte Lage zurückversetzt worden ist. Bei Überschreiten einer vorgegebenen Beschleunigung oder eines vorgegebenen Kippwinkels wird der Trägheitskörper 7 durch die aus der Beschleunigung wirkende Kraft oder beim Kippen durch die Schwerkraft an der Wand in Richtung des Rückstellknopfes bewegt. Infolgedessen drückt die Feder 3 den Ventilteller 4 in die geschlossene Stellung (siehe Fig. 2).

In der geschlossenen Stellung wirkt sodann der am Gaseinlass 1 anstehende Gasdruck auf die erste Fläche 1. Die durch den Gasdruck bewirkte Kraft hält den Ventilteller 4 entgegen der Gewichtskraft des Trägheitskörpers 7 in der geschlossenen Stellung.

Dadurch dass die erste Dichtung 13 größer ist als die zweite Dichtung 14, ist die erste Fläche F1, auf die in der Schließstellung der Gasdruck des Ventilraums 2 wirkt, größer als die zweite Fläche F2, auf die der Gasdruck am Gasauslass 8 wirkt.

D. h. die Masse des Trägheitskörpers 7 und die erste Fläche F1 sind zweckmäßigerweise so aufeinander abgestimmt, dass der Ventilteller 4 allein durch die Gewichtskraft des Trägheitskörpers 7 nicht wieder in die geöffnete Stellung zurückgezwungen werden kann. Nach dem Auslösen des Abschaltventils bleibt dieses dauerhaft in dem geschlossenen Zustand.

Durch manuelles Drücken auf den Rückstellknopf 18 kann der Trägheitskörper 7 gegen die erste Ventilstange 5 gedrückt und damit der Ventilteller 4 wieder in die Offenstellung gezwungen werden. In der Offenstellung wirkt durch den Gasdruck kein Druck auf den Ventilteller 4. Der Ventilteller 4 kann nun allein durch die Gewichtskraft des Trägheitskörpers 7 in der Offenstellung gehalten werden.

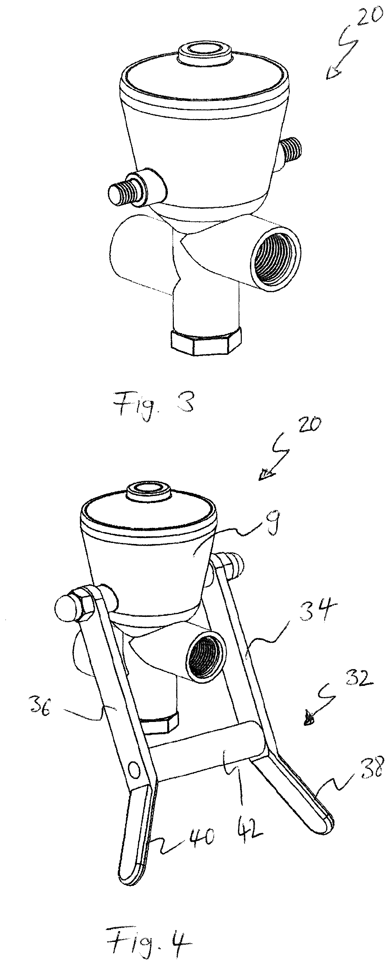

In Fig. 3 ist eine perspektivische Ansicht des in Fig. 1 und 2 dargestellten Abschaltventils 20 gezeigt.

Fig. 4 zeigt ein Abschaltventil 20 gemäß einem weiteren Ausführungsbeispiel der Erfindung. Das Abschaltventil 20 ist wie das in Fig. 1 bis 3 gezeigte Abschaltventil ausgebildet. Zusätzlich weist das Abschaltventil 20 eine Abstützeinrichtung 32 auf, die eingerichtet ist, um das Abschaltventil derart an einer Gasflasche abzustützen, dass das Abschaltventil eine definierte Ausrichtung relativ zur Gasflasche einnimmt.

In dem in Fig. 4 gezeigten Ausführungsbeispiel weist die Abstützeinrichtung 32 zwei Abstützarme 34, 36 auf, die jeweils schwenkbar an gegenüberliegenden Seiten der Wand 9 des Abschaltventils 20 angebracht sind. Die Abstützarme 34, 36 weisen jeweils Abstützenden 38, 40 auf, die beim Abstützen des Abschaltventils 20 mittels der Abstützeinrichtung 32 mit der Gasflasche in Eingriff treten. Die beiden Abstützarme 34, 36 sind durch ein Verbindungselement 42 miteinander verbunden, so dass die Abstützarme 34, 36 nicht unabhängig voneinander geschwenkt werden können. Wenn beide Abstützarme 34, 36 und/oder deren Abstützenden 38, 40 mit der Gasflasche in Eingriff treten, ist sichergestellt, dass das Abschaltventil 20 relativ zur Gasflasche die definierte Ausrichtung, d.h. die für die Funktion des Abschaltventils 20 erforderliche Ausrichtung, einnimmt.

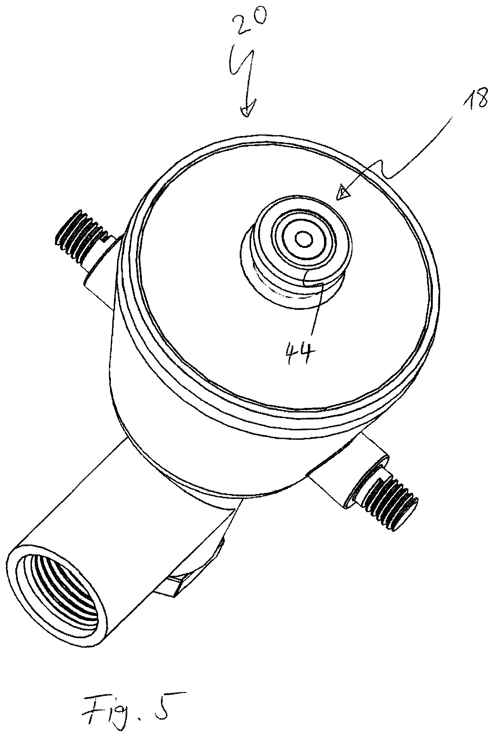

Fig. 5 zeigt ein Abschaltventil 20 gemäß einem weiteren Ausführungsbeispiel der Erfindung. Das Abschaltventil weist eine Libelle 44 auf, die am Rückstellknopf 18 angebracht ist. Im vorliegenden Ausführungsbeispiel ist die Libelle an der oberen Fläche des Rückstellknopfs 18 angebracht, die horizontal ist, wenn das Abschaltventil 20 die für die definierte Ausrichtung, d.h. die Funktion erforderliche Ausrichtung, einnimmt.

Wenn das Abschaltventil die definierte Ausrichtung einnimmt, befindet sich die Libellenblase der Libell 44 im Normalpunkt der Libelle. Auf diese Weise kann überprüft werden, ob das Abschaltventil korrekt ausgerichtet ist.

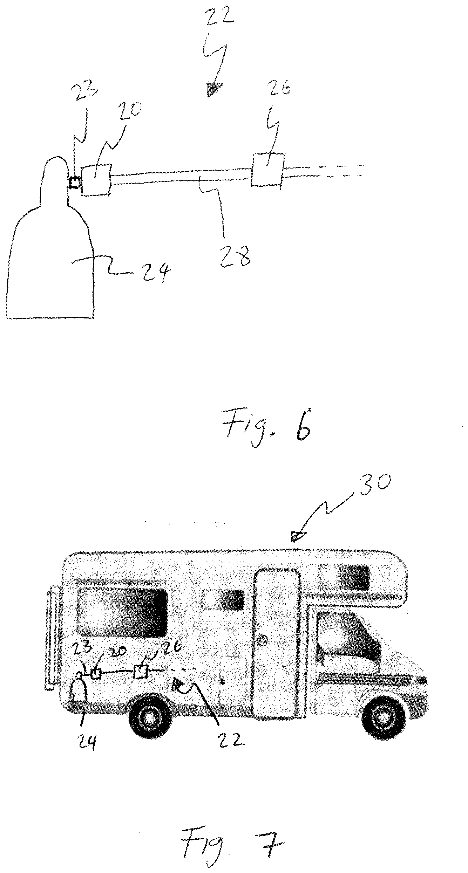

Fig. 6 zeigt ein Gasleitungssystem 22 gemäß einem Ausführungsbeispiel der Erfindung. Das Gasleitungssystem 22 umfasst einen Anschluss 23 für eine Gasflasche 24, einen Druckminderer 26 und eine zwischen Anschluss 23 und Druckminderer 26 angeordnete Leitungsanordnung 28. Ferner umfasst das Gasleitungssystem 22 zwischen dem Anschluss 23 und dem Druckminderer 26 ein Abschaltventil 20 zum Unterbrechen eines Gasdurchflusses bei Überschreiten einer vorgegebenen Beschleunigung. Das heißt, gemäß dem vorliegenden Ausführungsbeispiel ist das Abschaltventil 20 unmittelbar am Anschluss und stromaufwärts des Druckminderers 26 angeordnet. Mit anderen Worten befindet sich das Abschaltventil 20 im Hochdruckbereich des Gasleitungssystems 22.

Fig. 7 zeigt ein Fahrzeug 30, hier ein Reisemobil, mit einem Abschaltventil 20 bzw. einem Gasleitungssystem 22 mit einem Gasleitungsanschluss 23 für die Gasquelle 24, einem Druckminderer 26 und dem dazwischen angeordneten Abschaltventil 20.

### Bezugszeichenliste

- 1: Gaseinlass
- 2: Ventilraum
- 3: Feder
- 4: Ventilteller
- 5: erste Ventilstange
- 6: Schaltraum
- 7: Trägheitskörper
- 8: Gasauslass

- 9: Wand

- 10: erste Dichtung
- 11: Ventilsitz
- 12: weitererVentilsitz
- 13: zweite Dichtung
- 14: dritte Dichtung
- 15: Führung
- 16: zweiteVentilstange
- 17: Deckel
- 18: Rückstellknopf
- 19: vierte Dichtung
- F1: erste Fläche
- F2: zweite Fläche
- R: Rotationsachse
- 20: Abschaltventil
- 22: Leitungssystem
- 24: Gasquelle
- 26: Druckminderer
- 28: Leitungsanordnung
- 30: Fahrzeug
- 32: Abstützeinrichtung
- 34,: 36Abstützarme
- 38,: 40Abstützenden
- 42: Verbindungselement
- 44: Libelle

## Patentansprüche

1. Abschaltventil (20) zum Unterbrechen eines Gasdurchflusses bei Überschreiten einer vorgegebenen Beschleunigung oder/und eines vorgegebenen Kippwinkels, umfassend:
einen einem Gaseinlass (1) in Stromrichtung nachgeordneten Ventilraum (2), in welchem ein mittels einer Feder (3) vorgespannter Ventilteller (4) gegenüberliegend einem Ventilsitz (11) angeordnet ist, wobei der Ventilteller (4) entgegen einer Rückstellkraft der Feder (3) zwischen eine Offenstellung, in welcher Gas durch das Ventil fließt und einer Schließstellung, in welcher der Gasfluss durch das Ventil unterbrochen ist, bewegbar ist,
wobei eine sich vom Ventilteller (4) erstreckende erste Ventilstange (5) in einen Schaltraum (6) eines Trägheitskörpers ragt,
wobei ein im Schaltraum (6) vorgesehener Trägheitskörper (7) den Ventilteller (4) entgegen der Rückstellkraft der Feder (3) in der Offenstellung hält, solange die vorgegebene Beschleunigung oder/und der vorgegebene Kippwinkel nicht erreicht ist,
einen dem Ventilraum (2) in Stromrichtung nachgeordneten Gasauslass (8),
wobei eine Gewichtskraft des Trägheitskörpers (7) in der Offenstellung auf die erste Ventilstange (5) wirkt,
**dadurch gekennzeichnet, dass**
die Gewichtskraft, die in der Offenstellung auf den Ventilteller (4) wirkt, kleiner ist als eine durch einen Gasdruck bewirkte Schließkraft, welche in der Schließstellung auf den Ventilteller (4) wirkt.

2. Abschaltventil (20) nach Anspruch 1, wobei der Trägheitskörper (7) eine Kugel ist.

3. Abschaltventil (20) nach einem der vorhergehenden Ansprüche, wobei der Trägheitskörper eine Masse zwischen 30 und 100g aufweist.

4. Abschaltventil (20) nach einem der vorhergehenden Ansprüche, wobei der Schaltraum des Trägheitskörpers (6) rotationssymmetrisch ausgebildet ist.

5. Abschaltventil (20) nach einem der vorhergehenden Ansprüche, wobei sich der Schaltraum des Trägheitskörpers (6) in einer von der ersten Ventilstange (5) weg weisenden Richtung konisch erweitert.

6. Abschaltventil (20) nach einem der vorhergehenden Ansprüche, wobei eine Wand (9) des Schaltraums des Trägheitskörpers (6) mit einer Rotationsachse (R) einen Winkel von 9° bis 16°, vorzugsweise 10° bis 14°, einschließt.

7. Abschaltventil (20) nach einem der vorhergehenden Ansprüche, wobei die erste Ventilstange (5) gegenüber dem Schaltraum des Trägheitskörpers (6) durch eine erste Dichtung (10), vorzugsweise 0-Ring oder Lippendichtung, abgedichtet ist.

8. Abschaltventil (20) nach einem der vorhergehenden Ansprüche, wobei eine dem Ventilraum (2) zugewandte erste Fläche (F1) des Ventiltellers (4) größer ist als eine dem Gasauslass (8) zugewandte zweite Fläche (F2) des Ventiltellers (4),
wobei die erste Fläche (F1) vorzugsweise zumindest doppelt so groß ist wie die zweite Fläche (F2).

9. Abschaltventil (20) nach einem der vorhergehenden Ansprüche, wobei der Ventilteller (4) im Schließzustand gegenüber dem Ventilsitz (11) durch eine zweite Dichtung (13), vorzugsweise 0-Ring oder Lippendichtung, abgedichtet ist, und
wobei der Ventilteller (4) im Schließzustand gegenüber einem dem Gasauslass (8) zugewandten weiteren Ventilsitz (12) durch eine dritte Dichtung (14), vorzugsweise O-Ring oder Lippendichtung, abgedichtet ist.

10. Abschaltventil (20) nach einem der vorhergehenden Ansprüche, wobei der Ventilteller (4) an einer der ersten Ventilstange (5) gegenüberliegenden Seite eine in einer Führung (15) geführte zweite Ventilstange (16) aufweist,
wobei die zweite Ventilstange (16) in der Führung (15) vorzugsweise durch eine vierte Dichtung, vorzugsweise O-Ring oder Lippendichtung, abgedichtet ist.

11. Abschaltventil (20) nach Anspruch 10, wobei die Feder (3) die zweite Ventilstange (16) umgreift.

12. Abschaltventil (20) nach einem der vorhergehenden Ansprüche,
wobei das Ventil einen Mechanismus zur Rückstellung des Ventiltellers (4) von der Schließstellung in die Offenstellung aufweist,
wobei der Mechanismus vorzugsweise einen Rückstellknopf (18) oder einen Rückstellhebel aufweist, mit dem der Ventilteller (4) manuell in die Offenstellung bewegbar ist,
wobei der Rückstellknopf (18) oder Rückstellhebel vorzugsweise an einem Deckel (17) des Schaltraums (6) vorgesehen ist, wobei der Trägheitskörper (7) mittels des Rückstellknopfs (18) oder Rückstellhebels gegen die erste Ventilstange (5) gedrückt werden kann.

13. Abschaltventil (20) nach einem der vorangehenden Ansprüche, wobei das Abschaltventil eingerichtet ist, um unmittelbar an eine Gasflasche angeschlossen zu werden und das Abschaltventil ferner aufweist:
eine Abstützeinrichtung (32), die eingerichtet ist, um das Abschaltventil derart an der Gasflasche abzustützen, dass das Abschaltventil eine definierte Ausrichtung relativ zur Gasflasche einnimmt, und/oder
eine Libelle.

14. Leitungssystem (22) aufweisend:
einen Anschluss (23) für eine Gasflasche;
ein unmittelbar am Anschluss (23) und/oder stromaufwärts eines im Leitungssystem vorgesehenen Druckminderers (26) angeordnetes Abschaltventil (20) nach einem der vorangehenden Ansprüche.

15. Fahrzeug (30), vorzugsweise Caravan oder Reisemobil, aufweisend ein Abschaltventil (20) nach einem der Ansprüche 1 bis 13 oder ein Leitungssystem (22) nach Anspruch 14.

## Claims

1. A shut-off valve (20) for interrupting a gas flow when a predetermined acceleration and/or a predetermined tilting angle is exceeded, the shut-off valve comprising:
a valve chamber (2) arranged downstream of a gas inlet (1) in the direction of flow, in which a valve disc (4) preloaded by means of a spring (3) is arranged opposite a valve seat (11), wherein the valve disc (4) is movable against a restoring force of the spring (3) between an open position in which gas flows through the valve and a closed position in which the gas flow through the valve is interrupted,
wherein a first valve rod (5) extending from the valve disc (4) projects into a switching chamber (6) of an inertia body,
wherein an inertia body (7) provided in the switching chamber (6) holds the valve disc (4) in the open position against the restoring force of the spring (3) as long as the predetermined acceleration or/and the predetermined tilting angle is not reached,
a gas outlet (8) arranged downstream of the valve chamber (2),
wherein a weight force of the inertia body (7) acts on the first valve rod (5) in the open position,
**characterized in that**
the weight force acting on the valve disc (4) in the open position is smaller than a closing force caused by a gas pressure and acting on the valve disc (4) in the closed position.

2. The shut-off valve (20) according to claim 1, wherein the inertia body (7) is a ball.

3. The shut-off valve (20) according to any one of the preceding claims, wherein the inertia body comprises a mass of between 30 and 100 g.

4. The shut-off valve (20) according to any one of the preceding claims, wherein the switching chamber of the inertia body (6) is configured rotationally symmetrically.

5. The shut-off valve (20) according to any one of the preceding claims, wherein the switching chamber of the inertia body (6) widens conically in a direction away from the first valve rod (5).

6. The shut-off valve (20) according to any one of the preceding claims, wherein a wall (9) of the switching chamber of the inertia body (6) includes an angle of 9° to 16°, preferably of 10° to 14° with a rotational axis (R).

7. The shut-off valve (20) according to any one of the preceding claims, wherein the first valve rod (5) seals against the switching chamber of the inertia body (6) by a first seal (10), preferably an O ring or a lip seal.

8. The shut-off valve (20) according to any one of the preceding claims, wherein a first surface (F1) of the valve disc (4) facing towards the valve chamber (2) is greater than a second surface (F2) of the valve disc (4) facing towards the gas outlet (8),
wherein the first surface (F1) is preferably at least twice as large as the second surface (F2).

9. The shut-off valve (20) according to any one of the preceding claims, wherein in the closed position the valve disc (4) seals against the valve seat (11) by means of a second seal (13), preferably an O ring or a lip seal, and
wherein in the closed position the valve disc (4) seals against another valve seat (12) facing towards the gas outlet (8) by means of a third seal (14), preferably an O ring or a lip seal.

10. The shut-off valve (20) according to any one of the preceding claims, wherein the valve disc (4) comprises a second valve rod (16) guided in a guide (15) on a side opposite the first valve rod (5),
wherein the second valve rod (16) seals in the guide (15) preferably by a fourth seal, preferably an O ring or a lip seal.

11. The shut-off valve (20) according to claim 10, wherein the spring (3) surrounds the second valve rod (16).

12. The shut-off valve (20) according to any one of the preceding claims,
wherein the valve comprises a mechanism for resetting the valve disc (4) from the closed position into the open position,
wherein the mechanism preferably comprises a reset button (18) or a reset lever with which the valve disc (4) is manually movable into the open position,
wherein the reset button (18) or the reset lever is preferably provided on a cover (17) of the switching chamber (6), wherein the inertia body (7) may be pushed against the first valve rod (5) by means of the reset button (18) or reset lever.

13. The shut-off valve (20) according to any one of the preceding claims, wherein the shut-off valve is configured to be connected directly to a gas cylinder and wherein the shut-off valve further comprises:
a supporting device (32) which is configured to support the shut-off valve at the gas cylinder such that the shut-off valve assumes a defined orientation relative to the gas cylinder, and/or
a level.

14. A conduit system (22) comprising:
a connection (23) for a gas cylinder;
a shut-off valve (20) according to any one of the preceding claims arranged directly at the connection (23) and/or upstream a pressure regulator (26) provided in the conduit system.

15. A vehicle (30), preferably a caravan or a motor home, comprising a shut-off valve (20) according to any one of claims 1 to 13 or a conduit system (22) according to claim 14.

## Revendications

1. Soupape d'arrêt (20) pour l'interruption d'un flux de gaz lors du dépassement d'une accélération prédéfinie et/ou d'un angle d'inclinaison prédéfini, comprenant :
une chambre de soupape (2) disposée en aval d'une entrée de gaz (1) dans le sens du courant, dans laquelle une tête de soupape (4) précontrainte par le biais d'un ressort (3) est disposée à l'opposé d'un siège de soupape (11), la tête de soupape (4) pouvant être déplacée contre une force de rappel du ressort (3) entre une position ouverte dans laquelle du gaz s'écoule à travers la soupape et une position fermée dans laquelle le flux de gaz s'écoulant à travers la soupape est interrompu,
dans laquelle une première tige de soupape (5) s'étendant depuis la tête de soupape (4) fait saillie dans une chambre de commande (6) d'un corps à inertie dans laquelle un corps à inertie (7) prévu dans la chambre de commande (6) maintient la tête de soupape (4) dans la position ouverte contre la force de rappel du ressort (3), tant que l'accélération prédéfinie et/ou l'angle d'inclinaison prédéfini ne sont pas atteints,
une sortie de gaz (8) disposée en aval de la chambre de soupape (2) dans le sens du courant,
dans laquelle un poids du corps à inertie (7) agit sur la première tige de soupape (5) dans la position ouverte,
**caractérisée en ce que** le poids qui agit sur la tête de soupape (4) dans la position ouverte est moins important qu'une force de fermeture engendrée par une pression de gaz qui agit sur la tête de soupape (4) dans la position de fermeture.

2. Soupape d'arrêt (20) selon la revendication 1, dans laquelle le corps à inertie (7) est une sphère.

3. Soupape d'arrêt (20) selon l'une des revendications précédentes, dans laquelle le corps à inertie présente une masse comprise entre 30 et 100 g.

4. Soupape d'arrêt (20) selon l'une des revendications précédentes, dans laquelle la chambre de commande du corps à inertie (6) est conçue avec une symétrie de révolution.

5. Soupape d'arrêt (20) selon l'une des revendications précédentes, dans laquelle la chambre de commande du corps à inertie (6) s'élargit de manière conique dans une direction s'éloignant de la première tige de soupape (5).

6. Soupape d'arrêt (20) selon l'une des revendications précédentes, dans laquelle une paroi (9) de la chambre de commande du corps à inertie (6) forme un angle de 9° à 16°, de préférence de 10° à 14° avec un axe de rotation (R).

7. Soupape d'arrêt (20) selon l'une des revendications précédentes, dans laquelle la première tige de soupape (5) est rendue étanche vis-à-vis de la chambre de commande du corps à inertie (6), par un premier joint d'étanchéité (10), de préférence un joint torique ou un joint à lèvre.

8. Soupape d'arrêt (20) selon l'une des revendications précédentes, dans laquelle une première surface (F1) de la tête de soupape (4) tournée vers la chambre de soupape (2) est plus grande qu'une deuxième surface (F2) de la tête de soupape (4) tournée vers la sortie de gaz (8),
dans laquelle la première surface (F1) est de préférence au moins deux fois plus grande que la deuxième surface (F2).

9. Soupape d'arrêt (20) selon l'une des revendications précédentes, dans laquelle la tête de soupape (4) est rendue étanche dans l'état de fermeture vis-à-vis du siège de soupape (11) par le biais d'un deuxième joint d'étanchéité (13), de préférence un joint torique ou un joint à lèvre, et
dans laquelle la tête de soupape (4) est rendue étanche dans l'état de fermeture vis-à-vis d'un siège de soupape supplémentaire (12) tourné vers la sortie de gaz (8) par le biais d'un troisième joint d'étanchéité (14), de préférence un joint torique ou un joint à lèvre.

10. Soupape d'arrêt (20) selon l'une des revendications précédentes, dans laquelle la tête de soupape (4) présente une deuxième tige de soupape (16) amenée dans un dispositif de guidage (15) au niveau d'un côté opposé à la première tige de soupape (5),
dans laquelle la deuxième tige de soupape (16) dans le dispositif de guidage (15) est rendue étanche de préférence par le biais d'un quatrième joint d'étanchéité, de préférence un joint torique ou un joint à lèvre.

11. Soupape d'arrêt (20) selon la revendication 10, dans laquelle le ressort (3) enveloppe la deuxième tige de soupape (16).

12. Soupape d'arrêt (20) selon l'une des revendications précédentes,
dans laquelle la soupape présente un mécanisme de rappel de la tête de soupape (4) de la position de fermeture à la position d'ouverture,
dans laquelle le mécanisme présente de préférence un bouton de rappel (18) ou un levier de rappel avec lequel la tête de soupape (4) peut être déplacée manuellement dans la position d'ouverture,
dans laquelle le bouton de rappel (18) ou le levier de rappel est prévu de préférence au niveau d'un couvercle (17) de la chambre de commande (6), le corps à inertie (7) pouvant être poussé contre la première tige de soupape (5) au moyen du bouton de rappel (18) ou du levier de rappel.

13. Soupape d'arrêt (20) selon l'une des revendications précédentes, la soupape d'arrêt étant disposée de manière à être raccordée directement à une bouteille de gaz et la soupape d'arrêt présentant en outre :
un dispositif de support (32), qui est disposé de manière à ce que la soupape d'arrêt soit supportée contre la bouteille de gaz de telle sorte que la soupape d'arrêt prenne une orientation définie par rapport à la bouteille de gaz et/ou
une nivelle.

14. Système de conduite (22) comprenant :
un raccord (23) pour une bouteille de gaz ;
une soupape d'arrêt (20) disposée directement au niveau du raccord (23) et/ou en amont d'un réducteur de pression (26) prévu dans le système de conduite selon l'une des revendications précédentes.

15. Véhicule (30), de préférence une caravane ou un camping-car, présentant une soupape d'arrêt (20) selon l'une des revendications 1 à 13 ou un système de conduite (22) selon la revendication 14.
